# EUROPÄISCHE PATENTSCHRIFT

(11) **EP 3 538 784 B1**
(45) Veröffentlichungstag und Bekanntmachung des Hinweises auf die Patenterteilung: **07.04.2021**
(21) Anmeldenummer: 16797509.3
(22) Anmeldetag: 14.11.2016
(51) Int. Cl.: F16D 27/118, F16H 1/00

(54) **KUPPLUNGSANORDNUNG UND ANTRIEBSANORDNUNG**
CLUTCH ASSEMBLY AND DRIVE ASSEMBLY
ENSEMBLE EMBRAYAGE ET ENSEMBLE D'ENTRAÎNEMENT

(43) Veröffentlichungstag der Anmeldung: 18.09.2019
(73) Patentinhaber: GKN Driveline Bruneck AG, 39031 Bruneck (IT)
(72) Erfinder: GRUBER, Ivan, 39040 Schabs (IT); KÜNIG, Florian, 39030 Luttach (IT); NIEDERKOFLER, Markus, 39030 Luttach / Ahrntal (IT)
(74) Vertreter: Neumann Müller Oberwalleney & Partner Patentanwälte
(86) Internationale Anmeldenummer: PCT/EP2016/077599
(87) Internationale Veröffentlichungsnummer: WO 2018/086716

(56) Entgegenhaltungen:
- WO-A1-2015/071938
- DE-A1- 2 064 524
- DE-A1-102013 221 130
- DE-A1-102014 203 397

## Beschreibung

Die Erfindung betrifft eine Kupplungsanordnung mit einer Welle und einer Kupplung, insbesondere für einen Antriebsstrang eines Kraftfahrzeugs. Die Kupplung dient dazu, ein von einer Antriebsquelle erzeugtes Drehmoment optional nach Bedarf auf ein anzutreibendes Bauteil zu übertragen oder eine Drehmomentübertragung im Leistungspfad zwischen der Antriebsquelle und dem anzutreibenden Bauteil zu unterbrechen. Die Erfindung betrifft ferner eine Antriebsanordnung mit einer solchen Kupplungsanordnung.

Eine Antriebsanordnung für eine elektrisch getriebene Fahrzeugachse verwenden in der Regel Abschaltsysteme, um den Elektromotor bei höheren Fahrzeuggeschwindigkeiten von den Rädern abzukoppeln. Das erlaubt eine günstige Auslegung des Elektromotors in Bezug auf Traktion und reduziert bei höheren Fahrzeuggeschwindigkeiten Reibungsverluste.

Aus der DE 10 2014 203 397 A1 ist eine Schaltvorrichtung für eine Zahnrad-Welle-Verbindung, mit einer Welle, mit einem ersten und einem zweiten Zahnrad, mit einer Schiebemuffe zum drehfesten Verbinden von einem von dem ersten und dem zweiten Zahnrad mit der Welle, sowie mit einem elektromagnetischen Aktuator für die Aktuierung der Schiebemuffe bekannt. Das erste Zahnrad ist auf der zylindrischen Außenseite des Aktuators drehbar gelagert, wobei das Gehäuse des Aktuators drehend auf der Welle gelagert ist und ortsfest an einem Getriebegehäuse befestigt sein kann. Das erste Zahnrad ist somit ebenfalls über das Gehäuse des Aktuators gegen das ortsfeste Bauteil axial abgestützt. Das zweite Zahnrad ist über ein Nadellager auf dem ersten Zahnrad drehend gelagert und weist eine große Innenöffnung auf, durch die die Welle mit Radialspiel hindurch geführt ist.

Aus der DE 41 35 534 B4 ist eine elektromagnetische Kupplung zum selektiven Übertragen von Drehmoment zwischen zwei Antriebswellen bekannt. Die Kupplung umfasst ein erstes Kupplungselement, das mit der ersten Antriebswelle drehfest und axial verschiebbar verbunden ist sowie ein zweites Kupplungselement, das mit der zweiten Antriebswelle drehfest und axial verschiebbar verbunden ist, sowie einen Elektromagneten. Durch Erzeugen eines magnetischen Flusses wird das zweite Kupplungselement axial bewegt und in drehmomentübertragenden Eingriff mit dem ersten Kupplungselement gebracht.

Aus der DE 102 16 290 B4, entsprechend der US 6 945 895 B2, ist ein Differentialgetriebe mit einem drehend antreibbaren Gehäuse, einer Kupplung, einer elektromagnetischen Betätigungseinheit und einem Differentialrädersatz bekannt. Die Kupplung weist ein erstes Kupplungsteil auf, das drehfest und axial beweglich mit dem Gehäuse verbunden ist, sowie ein zweites Kupplungsteil, das zur Drehmomentübertragung mit dem Differentialrädersatz verbunden ist. Durch Betätigung des Elektromagneten wird das erste Kupplungsteil axial in Richtung zum zweiten Kupplungsteil beaufschlagt, so dass Drehmoment vom Gehäuse auf den Differentialrädersatz übertragen wird. Bei deaktiviertem Zustand wird die Kupplung wieder geöffnet.

Aus der DE 10 2013 111 891 A1 ist eine Differentialanordnung mit einer Kupplung und einem elektromagnetischen Aktuator zur Betätigung der Kupplung bekannt.

Aus der DE 10 2013 108 416 B4 ist ein Elektroantrieb für ein Kraftfahrzeug mit einem Elektromotor, einem Untersetzungsgetriebe mit einer Zwischenwelle und einem Differentialgetriebe bekannt. Auf der Zwischenwelle ist eine Ziehkeilvorrichtung mit einem Zwischenrad angeordnet, die von einem Aktuator betätigbar ist, um ein vom Elektromotor auf das Zwischenrad eingeleitetes Drehmoment wahlweise auf die Zwischenwelle zu übertragen, oder das Zwischenrad von der Zwischenwelle abzukoppeln. Der vorliegenden Erfindung liegt die Aufgabe zugrunde, eine elektromagnetisch betätigbare Kupplung-Wellenanordnung vorzuschlagen, die einen kompakten Aufbau hat und sich gut in ein Getriebe eines Antriebsstranges integrieren lässt. Die Aufgabe besteht ferner darin, eine entsprechende Antriebsanordnung mit einer solchen Kupplungsanordnung vorzuschlagen, das möglichst kompakt baut.

Eine Lösung besteht in einer Kupplungsanordnung für einen Antriebsstrang eines Kraftfahrzeugs, gemäß Anspruch 1.

Ein Vorteil besteht in der kompakten Anordnung der Baueinheit aus Welle, Formschlusskupplung und elektromagnetischem Aktuator, welche aufgrund der einteiligen Ausgestaltung des Zahnrads mit einem der Kupplungsteile nur eine geringe Teilezahl aufweist. Die genannte Kupplungsanordnung lässt sich damit einfach in bestehende Antriebssysteme integrieren, um eine zusätzliche Abschaltfunktion des Antriebsstrangs zu realisieren, wobei nur wenig mehr Teile und nur wenig mehr Bauraum gegenüber Systemen ohne Abschaltfunktion erforderlich sind. Die Kupplungsanordnung kann als eine Baueinheit in einem Gehäuse montiert werden, beispielsweise in einem Aluminiumgehäuse. Die genannte Baueinheit lässt sich somit durch geringe konstruktive Änderung des Gehäuses an ein bestehendes System anpassen. Dadurch, dass die funktionalen Komponenten, das heißt die Kupplungsteile und das Zahnrad auf der Welle als Baueinheit vormontiert sind, ist der Einstellaufwand (Shimming) der Anordnung gering. Ein weiterer Vorteil ist, dass die Kupplungs-Welleneinheit vielseitig, das heißt in diversen Antriebsanordnungen einsetzbar ist. Beispielsweise kann die Kupplungs-Welleneinheit Teil eines Untersetzungsgetriebes sein, insbesondere eines elektromotorisch antreibbaren Untersetzungsgetriebes, das ein von einer elektrischen Maschine eingeleitetes Drehmoment zum Antreiben einer Fahrzeugachse ins Langsame übersetzt. Beispielsweise kann die Kupplungs-Welleneinheit als Teil eines Elektroantriebs für ein 48-Volt-Hybridsystem verwendet werden.

Unter Formschlusskupplung ist im Rahmen der vorliegenden Offenbarung insbesondere gemeint, dass die Drehmomentübertragung durch formschlüssiges Ineinandergreifen zwischen zumindest zwei Kupplungsteilen erfolgt. Formschlusskupplungen bieten den Vorteil eines einfachen und kompakten Aufbaus. Als Beispiele für formschlüssige Kupplungen seien hier Klauenkupplungen oder Zahnkupplungen genannt.

Erfindungsgemäß weist die formschlüssige Kupplung erste Eingriffsmittel auf, die an einer Stirnseite des Zahnrad-Kupplungsteils vorgesehen sind, und zweite Eingriffsmittel, die an einer Stirnseite des Wellen-Kupplungsteils vorgesehen sind. Die ersten und zweiten Eingriffsmittel sind formschlüssig miteinander in Eingriff bringbar, so dass das Zahnrad und die Welle miteinander drehfest verbunden sind und gemeinsam um die Drehachse rotieren, oder außer Eingriff bringbar, so dass das Zahnrad und die Welle frei gegeneinander drehen können, das heißt kein Drehmoment übertragen wird.

Die Betätigung der Kupplung, das heißt die axiale Bewegung des Wellen-Kupplungsteils erfolgt durch den elektromagnetischen Aktuator. Dabei ist insbesondere vorgesehen, dass der elektromagnetische Aktuator eine Betätigungskraft in eine erste Richtung ausübt, während eine Rückstellkraft von mindestens einem Federelement erzeugt wird. Dabei ist der Aktuator insbesondere derart mit dem schaltbaren Kupplungsteil wirkverbunden, dass das schaltbare Kupplungsteil bei Bestromen des elektromagnetischen Aktuators in Schließstellung beaufschlagt wird, das heißt in Richtung zum axial abgestützten Zahnrad-Kupplungsteil. Demgegenüber wirkt das Federelement derart, dass es die Kupplung in Offenstellung beaufschlagt, das heißt, dass es das Zahnrad-Kupplungsteil und das Wellenkupplungsteil axial voneinander weg beaufschlagt. Hierfür ist das Federelement zumindest mittelbar gegen die Welle axial abgestützt, beispielsweise direkt gegen eine Stützfläche der Welle oder indirekt über einen Sicherungsring oder das Zahnrad. In einer konkreten Ausgestaltung kann das Federelement axial zwischen einer Anlagefläche des Zahnrad-Kupplungsteils und einer Anlagefläche des Wellenkupplungsteils angeordnet sein. Alternativ kann das Federelement auch gegen einen Axialsicherungsring, der in einer Ringnut der Welle einsitzt, axial abgestützt sein. Das Federelement kann beispielsweise in Form einer Tellerfeder, Wellfeder oder Schraubenfeder gestaltet sein.

In einer Ausführungsform kann das Zahnrad-Kupplungsteil mittels zumindest eines Wälzlagers auf der Welle drehbar gelagert sein, insbesondere mittels eines Kugellagers und/oder eines Nadellagers. Das Zahnrad-Kupplungsteil hat einen umlaufenden Zahnkranz, insbesondere mit einer Schrägverzahnung, wobei das zumindest eine Wälzlager in axialer Überdeckung mit dem Zahnkranz angeordnet sein kann. Auf diese Weise können auf die Verzahnung einwirkende Radialkräfte besonders gut über das Wälzlager radial abgestützt werden. Das Zahnrad kann als Eingangsrad der Wellenanordnung fungieren, das heißt der Drehmomentfluss verläuft vom Zahnrad über die Formschlusskupplung auf die Welle zum Antreiben der Antriebsachse des Kraftfahrzeugs. Alternativ kann das Zahnrad als Ausgangsrad dienen; in diesem Fall ist der Drehmomentfluss umgekehrt, das heißt von der Welle über die Kupplung auf das Zahnrad, welches ein im Leistungspfad nachgelagerten Antriebsteil antreibt.

Die Welle ist vorzugsweise in einem Gehäuse drehbar gelagert und gegenüber diesem axial abgestützt. Die Welle kann als Hohlwelle oder als Vollwelle gestaltet sein. Das Gehäuse kann nach einer Ausführungsform einen ringförmigen Stützabschnitt aufweisen, auf welchem das Zahnrad-Kupplungsteil mit einer inneren Zylinderfläche drehbar gelagert ist. Der ringförmige Stützabschnitt kann Teil eines Trägerteils sein. Das Trägerteil kann einen Verbindungsabschnitt aufweisen, der mit einem Gehäuseboden fest verbunden ist, sowie einen Flanschabschnitt, der axial zwischen dem Aktuator und dem Zahnrad-Kupplungsteil angeordnet ist, wobei sich der ringförmige Stützabschnitt von einem radial inneren Ende des Flanschabschnitts aus in axiale Richtung erstreckt.

Der Aktuator ist als elektromagnetischer Aktuator mit einem Elektromagneten und einen Kolben ausgestaltet. Der Kolben ist vorzugsweise so gestaltet, dass er bei Bestromen des Elektromagneten in Richtung zur Kupplung axial beaufschlagt wird und in stromlosen Zustand von der Kupplung weg bewegt wird. Das Magnetgehäuse des Aktuators ist vorzugsweise axial und in Umfangsrichtung gegenüber dem ortfesten Gehäuse abgestützt. Der Kolben ist mit einer Außenfläche gegenüber einer Innenfläche des Magnetgehäuses zentriert und axial verschiebbar angeordnet, wobei die Außenfläche des Kolbens mit einer Gleitschicht beschichtet sein kann. Der Kolben kann ein hülsenförmiges erstes Kolbenteil aus einem ferromagnetischen Material und ein hülsenförmiges zweites Kolbenteil aus einem nicht-magnetischen Material aufweisen, wobei das erste Kolbenteil in dem Magnetgehäuse zentriert und axial verschiebbar angeordnet ist und das zweite Kolbenteil mit dem ersten Kolbenteil fest verbunden ist. Das hülsenförmige zweite Kolbenteil, das auch als Hülsenabschnitt bezeichnet werden kann, ist auf der Welle radial gelagert.

Optional kann ein Sensor vorgesehen sein, der ausgestaltet ist, um ein die Position des Kolbens und/oder die Position des Wellenkupplungsteils repräsentierendes Signal zu erfassen. Dieses Signal kann an eine elektronische Regeleinheit weitergegeben und zur Steuerung eines oder mehrerer Fahrzeugparameter verwendet werden.

Die oben genannte Aufgabe wird ferner gelöst durch eine Antriebsanordnung für einen Antriebsstrang eines Kraftfahrzeugs, umfassend: ein Antriebsrad, das um eine erste Drehachse drehend antreibbar ist; und eine Kupplungsanordnung nach zumindest einer der oben genannten Ausführungsformen; wobei die Kupplungsanordnung ein Eingangsrad aufweist, das koaxial zur Welle angeordnet und mit dem Antriebsrad zur Drehmomentübertragung in Verzahnungseingriff ist; wobei das Eingangsrad der Kupplungsanordnung einen größeren Durchmesser aufweist als das Antriebsrad. Durch diese Ausgestaltung wird eine Übersetzung der Drehzahl vom Schnellen ins Langsame erreicht.

Die Antriebsanordnung kann ferner eine elektrische Maschine umfassen, die zur Drehmomentübertragung mit dem Antriebsrad verbunden ist. Die Einheit aus elektrischer Maschine und Kupplungsanordnung, gegebenenfalls mit einem Untersetzungsgetriebe, kann auch als Elektroantrieb bezeichnet werden. Elektroantriebe kommen in Kraftfahrzeugen zum Einsatz, welche neben der elektrischen Maschine noch eine weitere Antriebsquelle, in der Regel ein Verbrennungsmotor, aufweisen. Derartige Kraftfahrzeuge werden auch als Hybridelektrokraftfahrzeuge bezeichnet. Die Energie für die elektrische Maschine wird aus einer Speichereinrichtung im Fahrzeug bezogen. Elektrische Maschinen haben einen begrenzten Drehzahlbereich und werden daher häufig als Zusatzantrieb verwendet. Dabei wird die elektrische Maschine in erster Linie bei niedrigeren Fahrzeuggeschwindigkeiten zum Antrieb des Fahrzeugs verwendet, beispielsweise im Stadtverkehr, wo es zu häufigem Anfahren und Abbremsen kommt. Hier sind eine gute Traktion sowie ein gutes Anfahrverhalten aufgrund eines verhältnismäßig hohen zur Verfügung stehenden Drehmoments des Elektromotors gegeben. Bei höheren Fahrzeuggeschwindigkeiten, beispielsweise bei Überlandfahrten, wird die elektrische Maschine abgeschaltet, damit das Schleppmoment der elektrischen Maschine keinen negativen Effekt auf die Effizienz des Kraftfahrzeugs beziehungsweise den Kraftstoffverbrauch hat. Die elektrische Maschine kann sowohl als Generator und als Motor betrieben werden. Auf diese Weise ermöglicht das Hybridsystem im Kraftfahrzeug Funktionen zur Energierückgewinnung (Rekuperation), Drehmomentunterstützung des Verbrennungsmotors (Boosten) sowie einen komfortablen Start-Stopp- und Segelbetrieb (Coasting).

Die erfindungsgemäße Kupplungsanordnung 2 eignet sich insbesondere im Zusammenwirken mit einem 48-Volt-Hybridsystem, bei dem ein von der elektrischen Maschine erzeugtes Antriebsmoment dem vom Verbrennungsmotor angetriebenen Antriebsstrang aufgeprägt wird. Es ist jedoch auch eine Elektroantriebsanordnung mit 48-Volt-System als alleiniger Antrieb einer sekundären Antriebsachse (Hinter- oder Vorderachse) denkbar, deren primäre Antriebsachse (Vorder- oder Hinterachse) vom Verbrennungsmotor angetrieben wird.

Das Kupplungs-Zahnrad kann nach einer ersten Möglichkeit ein Ausgangsrad der Kupplungsanordnung sein. In diesem Fall wäre der Drehmomentfluss beim Antrieb der Einheit von der Welle über die Kupplung zum Kupplungs-Zahnrad auf ein Abtriebsrad, beispielsweise zum Antreiben eines Differentialkorbs. In einer konkreten Ausführungsform kann das Abtriebsrad ein mit dem Differentialkorb eines Differentialgetriebes verbundenes Ringrad sein. Der Differentialkorb ist um eine zur Drehachse der Kupplungseinheit parallele Drehachse drehbar in dem Gehäuse gelagert. Das Differentialgetriebe ist ausgestaltet, um ein in den Differentialkorb eingeleitetes Drehmoment auf zwei Ausgangsteile aufzuteilen. Bei dieser Ausführungsform ist die Wellen-Kupplungsanordnung folglich im Leistungspfad zwischen dem Antriebsrad und dem Abtriebsrad angeordnet. Insofern kann die Welle bei dieser Ausführungsform auch als Zwischenwelle bezeichnet werden.

Nach einer zweiten Möglichkeit kann das Kupplungs-Zahnrad ein Eingangsrad der Kupplungsanordnung sein. In diesem Fall wäre der Drehmomentfluss beim Antrieb der Einheit von dem Zahnradkupplungsteil auf das Wellenkupplungsteil auf die Welle und von dieser auf ein Abtriebsteil zum Antreiben einer Fahrzeugachse.

Bevorzugte Ausführungsbeispiele werden nachstehend anhand der Zeichnungsfiguren erläutert hierin zeigt:
- Figur 1: eine erfindungsgemäße Kupplungsanordnung in einer ersten Ausführungsform in perspektivischer Ansicht teilweise geschnitten;
- Figur 2: die Kupplungsanordnung aus Figur 1 im Längsschnitt;
- Figur 3: eine erfindungsgemäße Antriebsanordnung mit einer Kupplungsanordnung nach Figur 1 im Längsschnitt;
- Figur 4: eine erfindungsgemäße Kupplungsanordnung in einer zweiten Ausführungsform in perspektivischer Ansicht teilweise geschnitten;
- Figur 5: die Kupplungsanordnung aus Figur 4 im Längsschnitt; und
- Figur 6: eine erfindungsgemäße Antriebsanordnung mit einer Kupplungsanordnung nach Figur 4 im Längsschnitt.

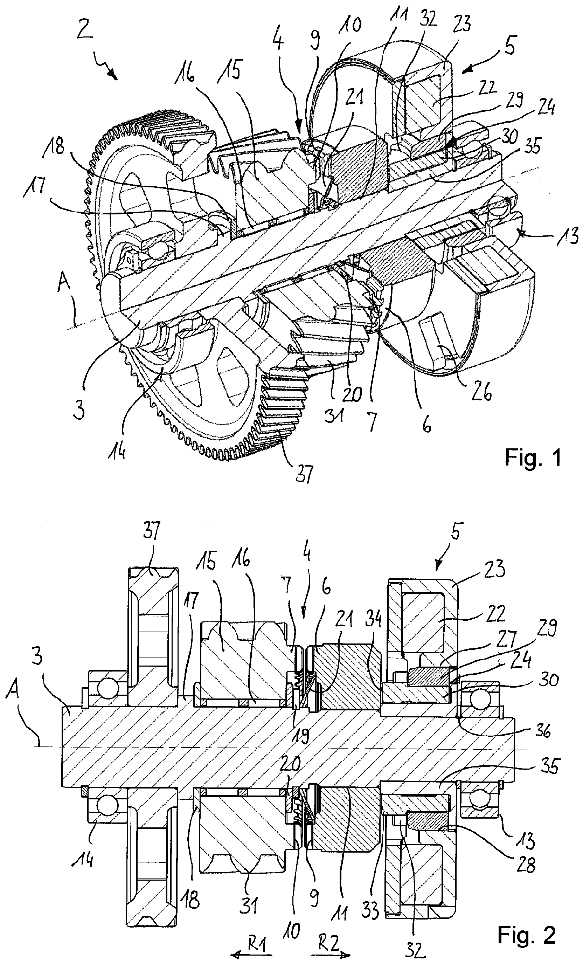

Die Figuren 1 bis 3 werden nachstehend gemeinsam beschrieben. Es ist eine erfindungsgemäße Anordnung 2 mit einer Welle 3, einer steuerbaren Kupplung 4 und einem Aktuator 5 zum Betätigen der Kupplung 4 gezeigt. Diese Anordnung 2 wird vorliegend auch als Kupplungsanordnung, Kupplungs-Wellenanordnung oder Kupplungseinheit bezeichnet.

Eine solche Kupplungsanordnung 2 kommt beispielsweise in einem Antriebsstrang eines Kraftfahrzeugs zum Einsatz, um einen ersten Antriebsstrangabschnitt im Leistungspfad vor der Kupplung und einen zweiten Antriebsstrangabschnitt im Leistungspfad hinter der Kupplung selektiv miteinander antriebsmäßig zu verbinden oder voneinander zu trennen. Insofern kommen derartige Kupplungsanordnungen 2 insbesondere bei Kraftfahrzeugen mit zwei Antriebssträngen beziehungsweise zwei Antriebsquellen zum Einsatz, von denen ein Antriebsstrang entsprechend nach Bedarf zu oder abgeschaltet werden kann.

Die Kupplung 4 umfasst ein erstes Kupplungsteil 6 und ein zweites Kupplungsteil 7, welche zueinander um eine Drehachse A drehbar angeordnet sind und in eine Schließstellung und eine Offenstellung überführbar sind. Die Kupplung 4 ist als Formschlusskupplung gestaltet, wobei das erste Kupplungsteil 6 ein an einer Stirnfläche ein erstes Eingriffsprofil 9 aufweist, das in der Schließstellung der Kupplung 3 in ein gegengleiches zweites Eingriffsprofil 10 des zweiten Kupplungsteils 6 zur Drehmomentübertragung eingreift. Die Eingriffsprofile 9, 10 der ersten und zweiten Kupplungsteil 6, 7 sind in Form von Stirnverzahnungen gestaltet. In den Figuren 1 bis 3 ist die Kupplung 4 in Offenstellung gezeigt, das heißt das erste Kupplungsteil 6 und das zweite Kupplungsteil 7 sind voneinander beabstandet, so dass sie frei gegeneinander drehen können. Der Drehmomentfluss zwischen den Kupplungsteilen 6, 7 ist unterbrochen, weswegen dieser Modus auch als Abkoppel-Modus (disconnect mode) bezeichnet werden kann. In der Schließstellung (nicht gezeigt) ist das erste Kupplungsteil 6 an das zweite Kupplungsteil 7 angenähert, so dass die Eingriffsprofile der Kupplungsteile zur Drehmomentübertragung ineinandergreifen.

Das erste Kupplungsteil 6 ist drehfest und axial beweglich mit der Welle 3 verbunden, und wird insofern auch als Wellen-Kupplungsteil bezeichnet. Zur drehfesten und axial beweglichen Verbindung ist insbesondere eine Wellenverzahnung 11 vorgesehen, das heißt die Welle 3 hat eine äußere Längsverzahnung, in die das erste Kupplungsteil 6 mit einer gegengleichen innere Längsverzahnung formschlüssig und axial beweglich eingreift. Die Welle 3 ist in einem Gehäuse 12 um eine Drehachse A3 drehbar gelagert, insbesondere mittels zweier Wälzlager 13, 14.

Das zweite Kupplungsteil 7 ist auf der Welle 3 drehbar gelagert und gegen die Welle 3 axial abgestützt. Es ist erkennbar, dass das zweite Kupplungsteil 7 einteilig mit einem Zahnrad 15 gestaltet ist. Insofern wird die das Kupplungsteil 7 und das Zahnrad 15 umfassende Komponente auch als Zahnrad-Kupplungteil bezeichnet. Unter einteilig wird im Rahmen der vorliegenden Offenbarung insbesondere verstanden, dass das Zahnrad 15 und das Kupplungsteil 7 nicht zerstörungsfrei voneinander getrennt werden können. Beispielsweise kann das Zahnrad-Kupplungsteil mittels eines Umformprozesses hergestellt werden, beispielsweise im Wege eines Sinterverfahrens.

Zur drehbaren Lagerung des Zahnrads 15 beziehungsweise zweiten Kupplungsteil 7 auf der Welle 3 ist eine Lageranordnung 16 vorgesehen, die vorliegend zwei axial benachbart zueinander angeordnete Wälzlager in Form von Nadellagern umfasst. Zur axialen Abstützung in eine erste Richtung R1 hat die Welle 3 einen ringförmigen Kragen 17 mit einer Anschlagfläche, gegen die das Zahnrad 15 über eine zwischengeschaltete, reibungsmindernde Gleitscheibe 18 axial abgestützt ist. In der entgegengesetzten zweiten Richtung R2 ist ein Sicherungsring 19 vorgesehen, der in eine entsprechende Ringnut der Welle 3 eingreift und gegen den das Zahnrad 15 über eine zwischengeschaltete, reibungsmindernde zweite Gleitscheibe 20 axial abgestützt ist. Auf diese Weise ist das Zahnrad-Kupplungsteil drehbar auf der Welle 3 gelagert und in beide axiale Richtungen R1, R2 gegenüber dieser abgestützt.

Es ist insbesondere in Figur 1 erkennbar, dass das Zahnrad 15 einen umlaufenden Zahnkranz 31 mit einer Schrägverzahnung aufweist. Die Lageranordnung 16, das heißt das Radiallager, liegt in axialer Überdeckung mit dem Zahnkranz 31. Auf diese Weise können auf die Verzahnung einwirkende Radialkräfte besonders gut über die Lageranordnung 16 radial abgestützt werden.

Die Betätigung der Kupplung 4, das heißt die axiale Bewegung des Wellen-Kupplungsteils 6 erfolgt durch den elektromagnetischen Aktuator 5. Der Aktuator 5 ist mittels einer elektronischen Regeleinheit (ECU, nicht dargestellt) ansteuerbar, insbesondere nach Bedarf in Abhängigkeit vom jeweiligen Fahrzustand des Kraftfahrzeugs. Vorliegend ist der elektromagnetische Aktuator 5 so gestaltet, dass er bei Bestromen eine Betätigungskraft in die erste Richtung R1 ausübt, das heißt im Schließsinn der Kupplung 4. Das erneute Öffnen der Kupplung 4 erfolgt bei Stromlosschalten des Aktuators 5 mittels einer Feder 21. Die Feder 21 ist in der ersten Richtung R1 gegen die Welle 3 axial abgestützt, und zwar über den Sicherungsring 19, und in der zweiten Richtung R2 gegen das zweite Kupplungsteil 6. Auf diese Weise wird das Wellenkupplungsteil 6 durch die Feder 21 axial vom Zahnrad-Kupplungsteil 7 weg beaufschlagt, so dass die Kupplung 4 geöffnet wird. Die Feder 21 ist vorliegend in Form einer Tellerfeder gestaltet, wobei es sich versteht, dass auch andere Arten von Federn, wie ein oder mehrere Schrauben- oder Wellfedern ebenso verwendet werden können.

Der elektromagnetische Aktuator 5 umfasst einen Elektromagneten 22, der in einem Aktuatorgehäuse 23 aufgenommen ist, und einen Kolben 24. Der Kolben 24 ist so gestaltet, dass er bei Bestromen des Elektromagneten 22 in Richtung zur Kupplung 4 axial beaufschlagt wird und in stromlosen Zustand von der Kupplung 4 weg bewegt wird. Das Magnetgehäuse 23 des Aktuators 5 ist axial und in Umfangsrichtung gegenüber einem ortfesten Bauteil 25, insbesondere einem Gehäuse, abgestützt. Wie insbesondere in Figur 1 zu sehen ist, hat das Magnetgehäuse 23 zumindest eine Ausnehmung 26, in die ein mit dem Gehäuse 25 verbundenes Drehsicherungselement (nicht dargestellt) formschlüssig eingreifen kann. Auf diese Weise ist das Magnetgehäuse 23 gegenüber dem ortsfesten Gehäuse 25 verdrehgesichert.

Der Kolben 24 ist mit einer Außenfläche 27 gegenüber einer Innenfläche 28 des Magnetgehäuses 23 zentriert und axial verschiebbar angeordnet, wobei die Außenfläche des Kolbens mit einer Gleitschicht beschichtet sein kann. Der Kolben 24 ist insbesondere zweiteilig gestaltet und weist ein Ankerelement 29 aus einem ferromagnetischen Material, beispielsweise einem Eisenwerkstoff, und eine Hülse 30 aus einem nicht-magnetischen Material, beispielsweise Edelstahl, Kupfer oder Aluminium auf. Das Ankerelement 29 ist hülsenförmig gestaltet und auf die Hülse 30 aufgepresst. Dadurch, dass das Ankerelement 29 aus einem ferromagnetischen Werkstoff hergestellt ist, wird es bei Betätigen des Elektromagneten 22 in Richtung zur Kupplung 4 bewegt, wobei der Spalt 32 überbrückt wird. Die Hülse 30 ist axial länger als das Ankerelement 29 und hat eine Stirnseite, welche bei Bestromen des Elektromagneten 22 auf das erste Kupplungsteil 6 einwirkt. Zur Reibungsminderung zwischen der Anlagefläche 33 des zweiten Kupplungsteils 6 und der Stirnseite 34 der Hülse 30 kann zumindest eine der beiden Flächen 33, 34 mit einer Gleitbeschichtung versehen sein.

Das Magnetgehäuse 23 ist mittels eines hülsenförmigen Trägerelements 35 auf der Welle 3 drehbar angeordnet. Das Trägerelement 35 ist auf der Welle 3 zwischen einem Wellenanschlag und einem Sicherungsring 36 axial gesichert. Zur Reibungsminderung kann das Trägerelement mit einer Gleitbeschichtung versehen sein. Das Trägerelement 35 ist insbesondere mit leichtem Radialspiel und/oder Axialspiel auf der Welle 3 gelagert, um Reibungsverluste und Verschleiß gering zu halten.

Die Kupplungsanordnung 2 umfasst bei der vorliegenden Ausführungsform ferner ein weiteres Zahnrad 37, das zur Drehmomentübertragung drehfest mit der Welle 3 verbunden ist, beispielsweise mittels einer Wellenverzahnung (Splines). Das Zahnrad 37 ist axial auf der Welle 3 fixiert, und zwar zwischen dem ringförmigen Kragen 17 und dem Lagerinnenring des Wälzlagers 14.

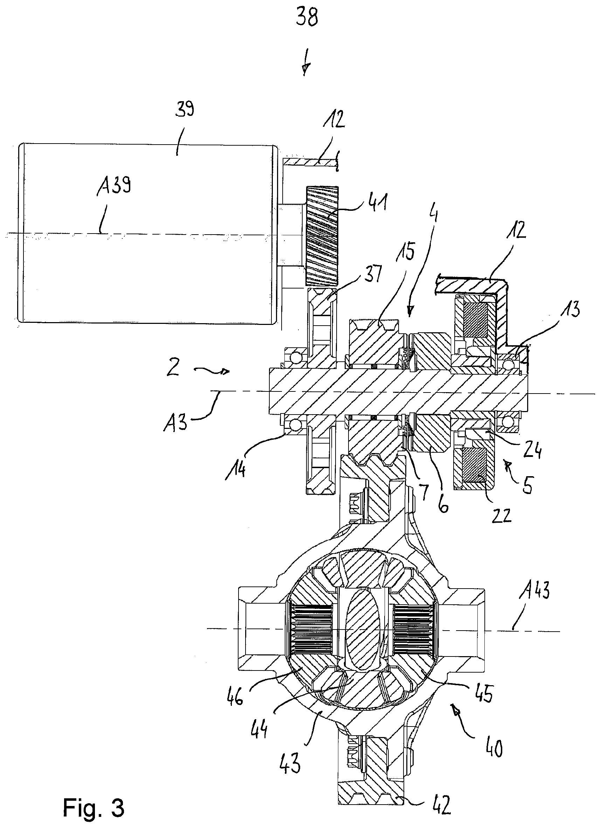

In Figur 3 ist eine erfindungsgemäße Antriebsanordnung 38 mit einer erfindungsgemäßen Kupplungsanordnung 2 gezeigt. Es ist erkennbar, dass die Kupplungsanordnung 2 im Leistungspfad zwischen einer Antriebsquelle 39 und einem Differentialgetriebe 40 angeordnet ist. Insofern kann die Welle 3 auch als Zwischenwelle bezeichnet werden. Die Antriebsquelle ist vorliegend in Form einer elektrischen Maschine 39 gestaltet, welche eine um eine erste Drehachse A39 drehend antreibbare Motorwelle aufweist. Die Zwischenwelle 3 ist auf einer zur ersten Drehachse A39 parallelen Drehachse A3 drehbar gelagert.

Das erste Zahnrad 37 wird von der Antriebsquelle 39 über ein mit der Motorwelle verbundenes Antriebsrad 41 drehend angetrieben. Es ist erkennbar, dass das Antriebsrad 41 einen kleineren Durchmesser und damit eine geringere Zähnezahl aufweist als das erste Zahnrad 37. Insofern erfolgt durch die so gebildete erste Zahnradpaarung eine Übersetzung ins Langsame. Das zweite Zahnrad 15 ist mit einem Ringrad 42 in Verzahnungseingriff, das mit dem Differentialträger 43 des Differentialgetriebes 40 verbunden ist. Auf diese Weise wird der Differentialträger 43 vom zweiten Zahnrad 15 um die dritte Drehachse A43 drehend angetrieben, die parallel zur Drehachse A3 der Zwischenwelle 3 liegt. Das zweite Zahnrad 15 hat einen kleineren Durchmesser und damit eine geringere Zähnezahl als das Ringrad 42, so dass durch diese zweite Zahnradpaarung eine weitere Übersetzung ins Langsame erfolgt.

In dem Differentialträger 43, der auch als Differentialkorb bezeichnet werden kann, sind mehrere Differentialräder 44 aufgenommen, die gemeinsam mit dem Korb um die Drehachse A43 umlaufen und mit einem ersten und einem zweiten Seitenwellenrad 45, 46 in Verzahnungseingriff sind. Mittels des Differentialgetriebes 40 wird das eingeleitete Drehmoment somit auf die beiden Seitenwellenräder 45, 46 zum Antreiben der Fahrzeugräder aufgeteilt.

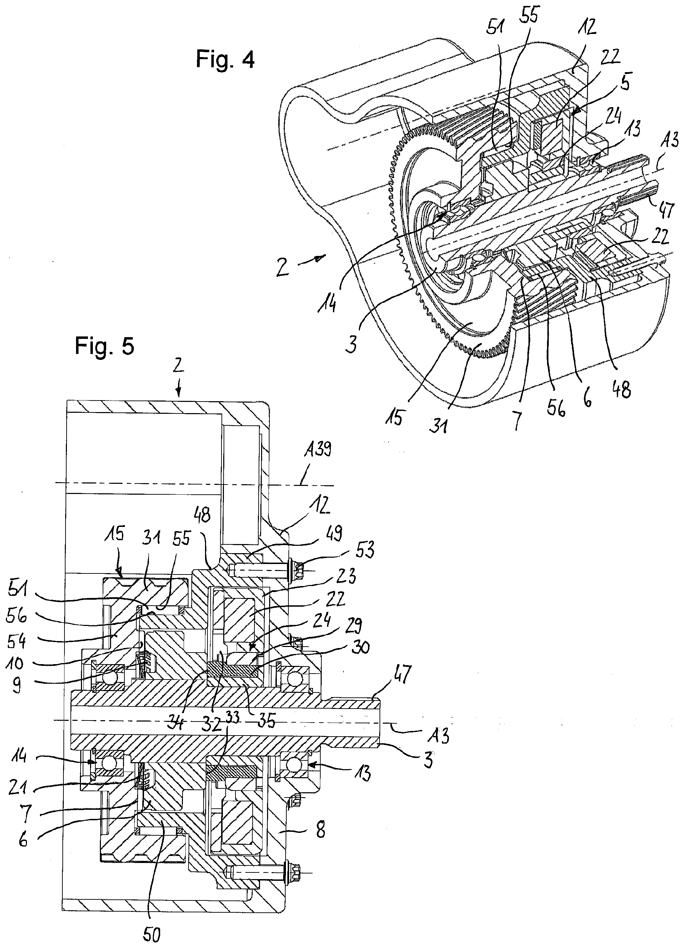

Die Figuren 4 bis 6, welche nachstehend gemeinsam beschrieben werden, zeigen eine erfindungsgemäße Kupplungsanordnung 2 beziehungsweise eine Antriebsanordnung 38 mit einer solchen Kupplungsanordnung 2 in einer zweiten Ausführungsform. Die vorliegende Ausführungsform entspricht in weiten Teilen der Ausführungsform gemäß den Figuren 1 bis 3, auf deren Beschreibung hinsichtlich der Gemeinsamkeiten insofern Bezug genommen wird. Dabei sind gleiche beziehungsweise einander entsprechende Einzelheiten mit gleichen Bezugszeichen versehen wie in den Figuren 1 bis 3. Nachstehend wird insbesondere auf die Unterschiede der vorliegenden Ausführungsform eingegangen.

Bei der vorliegenden Ausführungsform gemäß den Figuren 4 bis 6 dient das mit dem axial abgestützten Kupplungsteil 7 einteilig gestaltete Zahnrad 15 als Eingangsrad, welches von dem Antriebsrad 41 der elektrischen Maschine 39 drehend antreibbar ist. Insofern erfolgt der Drehmomentfluss vorliegend vom Antriebsrad 41, über das Zahnrad 15, das hiermit einteilige Kupplungsteil 7, das hiermit koppelbare Kupplungsteil 6 auf die Welle 3. Die Welle 3 ist über Lager 13, 14 in dem Gehäuse 12 um die Drehachse A3 drehbar gelagert. An einem Endabschnitt der Welle 3 ist eine Längsverzahnung (Splines) 47 vorgesehen, welche in eine entsprechende Gegenverzahnung eines Anschlussbauteils (nicht dargestellt) zur Drehmomentübertragung eingesteckt werden kann.

Das Gehäuse 12 hat bei der vorliegenden Ausführungsform ein Trägerteil 48, auf dem das Zahnrad 15 drehbar gelagert ist. Das Trägerteil 48 ist etwa deckelförmig gestaltet und umfasst einen Verbindungsabschnitt 49, der mit einem Gehäuseboden fest verbunden ist, und einen ringförmigen Stützabschnitt 50, auf dem das Zahnrad 15 mittels eines Lagers 51 drehbar gelagert ist. Zwischen dem Verbindungsabschnitt 49 und dem ringförmigen Stützabschnitt 50 ist ein Zwischenabschnitt 52 vorgesehen, der insbesondere als Flanschabschnitt gestaltet ist. Die Verbindung des Trägerteils 48 mit dem Gehäuseboden kann beispielsweise mittels Schrauben 53 erfolgen.

Das Zahnrad 15 hat bei der vorliegenden Ausführungsform einen Flanschabschnitt 54, der mittels des Lagers 14 auf der Welle 3 drehbar gelagert ist, und radial außen am Flanschabschnitt 54 den Zahnkranz 31, welcher eine größere Breite als der Flanschabschnitt aufweist und sich seitlich vom Flanschabschnitt 54 weg erstreckt. Auf diese Weise ist am Zahnrad 15 eine innenzylindrische Lagerfläche 55 ausgebildet, mit der das Zahnrad 15 auf einer außenzylindrischen Stützfläche 56 des Trägerteils 48 gelagert ist. Das Lager 51 ist vorliegend in Form eines Nadellagers gestaltet, ohne hierauf eingeschränkt zu sein. Von dem mit dem Zahnrad 15 kämmenden Antriebsrad 41 eingeleitete Radialkräfte können somit besonders gut über das Trägerteil 48 radial abgestützt und in das Gehäuse 12 eingeleitet werden. Von der Verzahnung des Antriebsrads 41 auf das Zahnrad 15 einwirkende Axialkräfte werden über das Lager 14, gegen die Welle 3 abgestützt, welche wiederum über das Lager 13 gegen das Gehäuse 12 axial abgestützt ist.

Es ist ferner erkennbar, dass zwischen dem Flanschabschnitt 54 des Trägerteils 48 und dem Gehäuseboden 8 ein Ringraum gebildet ist, in dem der elektromagnetische Aktuator 5 angeordnet ist. Hierdurch ergibt sich ein besonders kompakter Aufbau der Einheit. Das Magnetgehäuse 23 ist gegenüber dem Trägerteil 48 beziehungsweise dem Gehäuseboden axial abgestützt und verdrehgesichert. Ein weiterer Unterschied der vorliegenden Ausführungsform besteht darin, dass die Feder 21 direkt zwischen den beiden Kupplungsteilen 6, 7 wirksam eingesetzt ist, das heißt ein Ende der Feder stützt sich gegen das Wellen-Kupplungsteil und das andere Ende der Feder gegen das Zahnrad-Kupplungsteil ab.

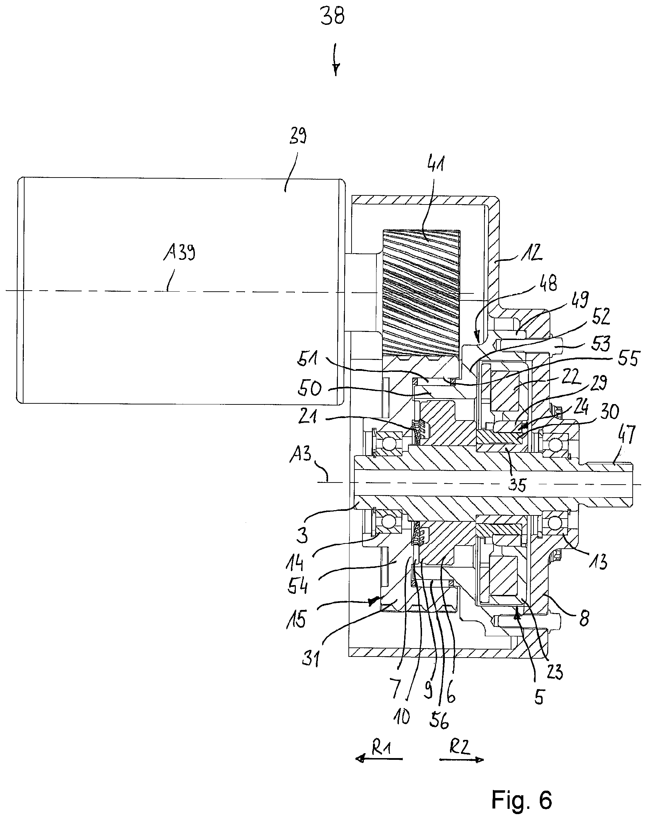

In Figur 6 ist die Kupplungsanordnung 2 als Teil einer Antriebsanordnung 38 gezeigt. Es ist erkennbar, dass das Zahnrad 15 der Kupplungsanordnung 2 mit dem Antriebsrad 41 der elektrischen Maschine 39 in Verzahnungseingriff ist und insofern als Eingangsrad fungiert. Die Welle 3 hat an ihrem aus dem Gehäuse 12 herausragenden freien Ende die Wellenverzahnung 47, die mit einem im Leistungspfad nachgelagerten Antriebsbauteil zum Antreiben einer Fahrzeugachse drehfest verbindbar ist. Beispielsweise kann die gezeigte Elektroantriebsanordnung 38 gemeinsam an einer von einem Verbrennungsmotor antreibbaren Antriebsachse verwendet werden, und zwar derart, dass ein von der elektrischen Maschine erzeugtes Antriebsmoment dem vom Verbrennungsmotor angetriebenen Antriebsstrang aufgeprägt wird.

Insgesamt bieten die erfindungsgemäßen Kupplungsanordnungen 2 den Vorteil eines kompakten Aufbaus. Dabei lässt sich die Anordnung aus Welle 3, Formschlusskupplung 4 und elektromagnetischem Aktuator 5 als vormontierte Baueinheit einfach in ein bestehendes Getriebe beziehungsweise Antriebssystem integrieren. Aufgrund der einteiligen Ausgestaltung des Zahnrads 15 mit dem Kupplungsteil 7 weist die Einheit nur eine geringe Teilezahl auf.

### Bezugszeichenliste

- 2: Kupplungsanordnung
- 3: Welle
- 4: Kupplung
- 5: Aktuator
- 6: erstes Kupplungsteil
- 7: zweites Kupplungsteil
- 8: Gehäuseboden
- 9: Eingriffsprofil
- 10: Eingriffsprofil
- 11: Wellenverzahnung
- 12: Gehäuse
- 13: Wälzlager
- 14: Wälzlager
- 15: Zahnrad
- 16: Lageranordnung
- 17: Kragen
- 18: Gleitscheibe
- 19: Sicherungsring
- 20: Gleitscheibe
- 21: Feder
- 22: Elektromagneten
- 23: Aktuatorgehäuse
- 24: Kolben
- 25: ortfestes Bauteil
- 26: Ausnehmung
- 27: Außenfläche
- 28: Innenfläche
- 29: Ankerelement
- 30: Hülse
- 31: Zahnkranz
- 32: Spalt
- 33: Anlagefläche
- 34: Stirnseite
- 35: Trägerelement
- 36: Sicherungsring
- 37: Zahnrad
- 38: Antriebsanordnung
- 39: Antriebsquelle
- 40: Differentialgetriebe
- 41: Antriebsrad
- 42: Ringrad
- 43: Differentialträger
- 44: Differentialräder
- 45: Seitenwellenrad
- 46: Seitenwellenrad
- 47: Endabschnitt
- 48: Trägerteil
- 49: Verbindungsabschnitt
- 50: Stützabschnitt
- 51: Lager
- 52: Zwischenabschnitt
- 53: Schrauben
- 54: Flanschabschnitt
- 55: Lagerfläche
- 56: Stützfläche

- A: Drehachse
- R: Richtung

## Patentansprüche

1. Kupplungsanordnung für einen Antriebsstrang eines Fahrzeugs, umfassend:
eine Welle (3), die in einem Gehäuse (12) um eine Wellenachse (A3) drehbar gelagert ist;
ein Zahnrad (15);
eine steuerbare Kupplung (4), die ausgestaltet ist, um optional Drehmoment zwischen der Welle (3) und dem Zahnrad (15) zu übertragen oder eine Drehmomentübertragung zu unterbrechen, wobei die Kupplung (4) ein Zahnrad-Kupplungsteil (7) aufweist, das einteilig mit dem Zahnrad (15) gestaltet ist, und
ein Wellenkupplungsteil (6), das drehfest und axial beweglich mit der Welle (3) verbunden ist, wobei erste Eingriffsmittel (9) an einer Stirnseite des Wellen-Kupplungsteils (6) vorgesehen sind, und zweite Eingriffsmittel (10) an einer Stirnseite des Zahnrad-Kupplungsteils (7) vorgesehen sind, wobei die ersten und zweiten Eingriffsmittel (9, 10) zur Drehmomentübertragung formschlüssig miteinander in Eingriff bringbar sind;
einen elektromagnetischen Aktuator (5) zum Betätigen der Kupplung (4), wobei der elektromagnetische Aktuator (5) einen ringförmigen Elektromagneten (22) aufweist, der koaxial zur Welle (3) angeordnet und gegen ein ortsfestes Bauteil (12) axial abgestützt ist, sowie einen vom Elektromagneten (22) axial bewegbaren Kolben (24), der mit dem Wellen-Kupplungsteil (6) zur Übertragung einer axialen Bewegung verbunden ist; und
ein Federelement (21), welches das Zahnrad-Kupplungsteil (7) und das Wellenkupplungsteil (6) axial voneinander weg beaufschlagt;
**dadurch gekennzeichnet,**
**dass** das Zahnrad (15) auf der Welle (3) drehbar gelagert und gegen die Welle (3) axial abgestützt ist.

2. Kupplungsanordnung nach Anspruch 1,
**dadurch gekennzeichnet, dass** das Zahnrad-Kupplungsteil (7) mittels zumindest eines Wälzlagers (16) auf der Welle (3) drehbar gelagert ist, und/oder dass das Zahnrad-Kupplungsteil (7) mittels eines Lagers (51) auf einem ortsfesten Trägerteil (48) drehbar gelagert ist.

3. Kupplungsanordnung nach Anspruch 2,
**dadurch gekennzeichnet, dass** das Zahnrad-Kupplungsteil (7) einen umlaufenden Zahnkranz (31) aufweist, insbesondere mit einer Schrägverzahnung, wobei zumindest eines von dem Wälzlager (16) und dem Lager (51) in axialer Überdeckung mit dem Zahnkranz (31) angeordnet ist.

4. Kupplungsanordnung nach einem der Ansprüche 1 bis 3,
**dadurch gekennzeichnet, dass** ein Gehäuse (12) vorgesehen ist, in dem die Welle (3) drehbar gelagert ist, wobei das Gehäuse (12) einen ringförmigen Stützabschnitt (50) aufweist, auf welchem das Zahnrad-Kupplungsteil (7) mit einer inneren Zylinderfläche (55) drehbar gelagert ist, wobei die Welle (3) gegenüber dem Gehäuse (12) axial abgestützt ist.

5. Kupplungsanordnung nach Anspruch 4,
**dadurch gekennzeichnet, dass** der ringförmige Stützabschnitt (50) Teil eines Trägerteils (48) ist, wobei das Trägerteil (48) einen Verbindungsabschnitt (49) aufweist, der mit einem Gehäuseboden fest verbunden ist und einen Flanschabschnitt (54), der axial zwischen dem Aktuator (5) und dem Zahnrad (15) angeordnet ist, von dem sich der ringförmige Stützabschnitt (50) an einem radial inneren Ende in axiale Richtung erstreckt.

6. Kupplungsanordnung nach einem der Ansprüche 1 bis 5,
**dadurch gekennzeichnet, dass** der Aktuator (5) ein Aktuatorgehäuse (23) aufweist, das mit dem ortsfesten Gehäuse (12) fest verbunden ist, insbesondere axial und in Umfangsrichtung abgestützt ist.

7. Kupplungsanordnung nach einem der Ansprüche 1 bis 6,
**dadurch gekennzeichnet, dass** der Kolben (24) mit einer Außenfläche gegenüber einer Innenfläche des Aktuatorgehäuses (23) zentriert und axial verschiebbar angeordnet ist, wobei die Außenfläche des Kolbens (24) insbesondere mit einer Gleitschicht beschichtet ist.

8. Kupplungsanordnung nach Anspruch 7,
**dadurch gekennzeichnet, dass** der Kolben (24) ein Ankerelement (29) aus einem ferromagnetischen Material und eine Hülse (30) aus einem nicht-magnetischen Material aufweist, wobei das Ankerelement (29) in dem Aktuatorgehäuse (23) zentriert und axial verschiebbar angeordnet ist und wobei die Hülse (30) mit dem Ankerelement (29) fest verbunden ist.

9. Kupplungsanordnung nach einem der Ansprüche 1 bis 8,
**dadurch gekennzeichnet, dass** der Aktuator (5) ein Hülsenteil (35) aufweist, das mit dem Aktuatorgehäuse (23) verbunden ist, wobei der Aktuator (5) mit dem Hülsenteil (35) koaxial auf der Welle (3) angeordnet, insbesondere drehbar gelagert ist.

10. Antriebsanordnung (38) für einen Antriebsstrang eines Kraftfahrzeugs, umfassend: ein Antriebsrad (41), das um eine erste Drehachse (A41) drehend antreibbar ist, und eine Kupplungsanordnung (2) nach einem der Ansprüche 1 bis 9,
wobei die Kupplungsanordnung (2) ein Eingangsrad (15, 37) aufweist, das koaxial zur Welle (3) angeordnet und mit dem Antriebsrad (41) zur Drehmomentübertragung in Verzahnungseingriff ist,
wobei das Eingangsrad (15, 37) der Kupplungsanordnung (2) einen größeren Durchmesser aufweist als das Antriebsrad (41).

11. Antriebsanordnung nach Anspruch 10,
ferner umfassend eine elektrische Maschine (39), die zur Drehmomentübertragung mit dem Antriebsrad (41) verbunden ist.

12. Antriebsanordnung nach Anspruch 10 oder 11,
ferner umfassend ein Abtriebsteil (43) mit einem Abtriebsrad (42), das um eine dritte Drehachse (A43) drehend antreibbar ist,
wobei die Kupplungsanordnung (2) im Leistungspfad zwischen dem Antriebsrad (41) und dem Abtriebsrad (42) angeordnet ist,
wobei das Kupplungs-Zahnrad (15) mit dem Abtriebsrad (42) des Abtriebsteils (43) zur Drehmomentübertragung in Verzahnungseingriff ist,
wobei das Kupplungs-Zahnrad (15) einen kleineren Durchmesser aufweist als das Abtriebsrad (42).

13. Antriebsanordnung nach Anspruch 12,
**dadurch gekennzeichnet, dass** das Abtriebsteil (43) ein Differentialkorb eines Differentialgetriebes (40) ist, wobei das Differentialgetriebe (40) ausgestaltet ist, um ein in den Differentialkorb eingeleitetes Drehmoment auf zwei Ausgangsteile (45, 46) aufzuteilen.

14. Antriebsanordnung nach Anspruch 10 oder 11,
**dadurch gekennzeichnet, dass** das Kupplungs-Zahnrad (15) das Eingangsrad der Kupplungsanordnung (2) ist.

## Claims

1. Clutch assembly for a driveline of a motor vehicle, comprising:
a shaft (3) that is rotatably supported around a shaft axis (A3) in a housing (12);
a gear (15);
a controllable clutch (4) which is configured for optionally transmitting torque between the shaft (3) and the gear (15) or for interrupting a transmission of torque, wherein the clutch (4) comprises a gear clutch part (7) that is integrally formed with the gear (15), and a shaft clutch part (6) that is connected to the shaft (3) in a rotationally fixed and axially movable way, wherein first engagement means (9) are provided at an end face of the shaft clutch part (6), and second engagement means (10) are provided at an end face of the gear clutch part (7),
wherein the first and the second engagement means (9, 10) can be form-lockingly engaged with each other for transmitting torque;
an electromagnetic actuator (5) for actuating the clutch (4), wherein the electromagnetic actuator (5) comprises an annular electromagnet (22) that is arranged coaxially relative to the shaft (3) and that is axially supported against a stationary component (12), as well as a piston (24) that is axially movable by the electromagnet (22) and that is connected to the shaft clutch part (6) for transmitting an axial movement; and
a spring element (21) that biases the gear clutch part (7) and the shaft clutch part (6) axially away from one another;
**characterised in**
**that** the gear (15) is rotatably mounted on the shaft (3) and axially supported against the shaft (3).

2. Clutch assembly according to claim 1,
**characterised in that** the gear clutch part (7) is rotatably supported on the shaft (3) by at least one roller bearing (16), and/or
that the gear clutch part (7) is rotatably supported on a stationary carrier part (48) by means of a bearing (51).

3. Clutch assembly according to claim 2,
**characterised in that** the gear clutch part (7) comprises a circumferential sprocket (31), in particular with a helical toothing, wherein at least one of the roller bearing (16) and the bearing (51) is arranged with axial overlap with the sprocket (31).

4. Clutch assembly according to any one of claims 1 to 3,
**characterised in that** a housing (12) is provided in which the shaft (3) is rotatably supported, wherein the housing (12) comprises an annular supporting portion (50) on which the gear clutch part (7) is rotatably supported with an inner cylindrical face (55), wherein the shaft (3) is axially supported relative to the housing (12).

5. Clutch assembly according to claim 4,
**characterised in that** the annular supporting portion (50) is part of a carrier part (48), wherein the carrier part (48) comprises a connecting portion (49) that is fixedly connected to a housing bottom and a flange portion (54) that is arranged axially between the actuator (5) and the gear (15) and from which flange portion (54), at a radially inner end, the annular supporting portion (50) axially extends.

6. Clutch assembly according to any one of claims 1 to 5,
**characterised in that** the actuator (5) comprises an actuator housing (23) that is fixedly connected to the stationary housing (12), in particular is axially and circumferentially supported.

7. Clutch assembly according to any one of claims 1 to 6,
**characterised in that** the piston (24), with an outer face, is arranged so as to be centred and axially displaceable relative to an inner face of the actuator housing (23), wherein the outer face of the piston (24) is in particular coated with a sliding layer.

8. Clutch assembly according to claim 7,
**characterised in that** the piston (24) comprises an armature element (29) made of a ferromagnetic material and a sleeve (30) made of a non-magnetic material, wherein the armature element (29) is arranged so as to be centred and axially displaceable in the actuator housing (23) and wherein the sleeve (30) is fixedly connected with the armature element (29).

9. Clutch assembly according to claims 1 to 8,
**characterised in that** the actuator (5) comprises a sleeve part (35) that is connected to the actuator housing (23), wherein the actuator (5) with the sleeve part (35) is arranged coaxially on the shaft (3), in particular rotatably mounted.

10. Drive assembly (38) for a driveline of a motor vehicle, comprising: a drive gear (41) that is rotatingly drivable around a first rotational axis (A41), and a clutch assembly (2) according to any one of claims 1 to 9,
wherein the clutch assembly (2) comprises an input gear (15, 37) that is arranged coaxially relative to the shaft (3) and that meshingly engages the input gear (41) for transmitting torque,
wherein the input gear (25, 37) of the clutch assembly (2) has a greater diameter than the driving gear (41).

11. Drive assembly according to claim 10,
further comprising an electric machine (39) that is connected to the driving gear (41) for transmitting torque.

12. Drive assembly according to claim 10 or 11,
further comprising an output part (43) with an output gear (42) that is rotatingly drivable around a third rotational axis (A43),
wherein the clutch assembly (2) is arranged in the power path between the drive gear (41) and the output gear (42),
wherein the clutch gear (15) meshingly engages with the output gear (42) of the output part (43) for transmitting torque,
wherein the clutch gear (15) has a smaller diameter than the output gear (42).

13. Drive assembly according to claim 12,
**characterised in that** the output part (43) is a differential carrier of a differential gearing (40), wherein the differential gearing (40) is configured to distribute torque introduced to the differential carrier to two output parts (45, 46).

14. Drive assembly according to claim 10 or 11,
**characterised in that** the clutch gear (15) constitutes the input gear of the clutch assembly (2).

## Revendications

1. Ensemble embrayage pour une chaîne d'entraînement d'un véhicule, comprenant :
un arbre (3) qui est disposé rotatif sur un axe d'arbre (A3) dans un logement (12) ;
une roue dentée (15) ;
un embrayage (4) pouvant être commandé, qui est conçu pour, en option, transmettre un couple de rotation entre l'arbre (3) et la roue dentée (15) ou interrompre une transmission de couple de rotation,
dans lequel l'embrayage (4) présente une partie d'embrayage de roue dentée (7) qui est conçue d'une seule pièce avec la roue dentée (15), et une partie d'embrayage d'arbre (6) qui est reliée en résistance à la rotation et mobile axialement avec l'arbre (3),
dans lequel des premiers moyens d'engrènement (9) sont prévus sur une face avant de la partie d'embrayage d'arbre (6) et des seconds moyens d'engrènement (10) sont prévus sur une face avant de la partie d'embrayage de roue dentée (7), dans lequel les premiers et seconds moyens d'engrènement (9, 10) peuvent s'engrener l'un avec l'autre par complémentarité de forme pour la transmission de couple de rotation ;
un actionneur électromagnétique (5) pour actionner l'embrayage (4), dans lequel l'actionneur électromagnétique (5) présente un électroaimant annulaire (22) qui est disposé coaxialement à l'arbre (3) et est appuyé axialement contre une pièce fixe (12), ainsi qu'un piston (24) mobile axialement à partir de l'électroaimant (22), qui est relié à la partie d'embrayage d'arbre (6) pour transmettre un mouvement axial ; et
un élément de ressort (21) qui sollicite la partie d'embrayage de roue dentée (7) et la partie d'embrayage d'arbre (6) en les éloignant axialement l'une de l'autre ;
**caractérisé en ce que**
la roue dentée (15) est disposée rotative sur l'arbre (3) et est appuyée axialement contre l'arbre (3).

2. Ensemble embrayage selon la revendication 1, **caractérisé en ce que** la partie d'embrayage de roue dentée (7) est disposée rotative sur l'arbre (3) au moyen d'au moins un palier à roulement (16), et/ou que la partie d'embrayage de roue dentée (7) est disposée rotative sur une partie porteuse (48) fixe au moyen d'un palier (51).

3. Ensemble embrayage selon la revendication 2, **caractérisé en ce que** la partie d'embrayage de roue dentée (7) présente une couronne dentée (31) périphérique, en particulier avec une denture en biais, dans lequel au moins un du palier à roulement (16) et du palier (51) est disposé en recouvrement axial avec la couronne dentée (31).

4. Ensemble embrayage selon l'une des revendications 1 à 3, **caractérisé en ce qu'**un logement (12) est prévu dans lequel l'arbre (3) est disposé rotatif, dans lequel le logement (12) présente un tronçon d'appui annulaire (50) sur lequel la partie d'embrayage de roue dentée (7) est disposée rotative avec une face de cylindre intérieure (55), dans lequel l'arbre (3) est appuyé axialement par rapport au logement (12).

5. Ensemble embrayage selon la revendication 4, **caractérisé en ce que** le tronçon d'appui annulaire (50) fait partie d'une partie porteuse (48), dans lequel la partie porteuse (48) présente un tronçon de liaison (49) qui est relié fixement à un fond du logement, et un tronçon de bride (54) qui est disposé axialement entre l'actionneur (5) et la roue dentée (15), à partir duquel le tronçon d'appui annulaire (50) à une extrémité intérieure radiale s'étend en direction axiale.

6. Ensemble embrayage selon l'une des revendications 1 à 5, **caractérisé en ce que** l'actionneur (5) présente un logement d'actionneur (23) qui est relié fixement au logement (12) fixe, est en particulier appuyé axialement et dans le sens périphérique.

7. Ensemble embrayage selon l'une des revendications 1 à 6, **caractérisé en ce que** le piston (24) est disposé centré et mobile axialement par une face extérieure par rapport à une face intérieure du logement d'actionneur (23), dans lequel la face extérieure du piston (24) est revêtue en particulier d'une couche de coulissement.

8. Ensemble embrayage selon la revendication 7, **caractérisé en ce que** le piston (24) présente un élément d'ancrage (29) réalisé dans un matériau ferromagnétique et un manchon (30) réalisé dans un matériau non-magnétique, dans lequel l'élément d'ancrage (29) est disposé centré et mobile axialement dans le logement d'actionneur (23) et dans lequel le manchon (30) est relié fixement à l'élément d'ancrage (29) .

9. Ensemble embrayage selon l'une des revendications 1 à 8, **caractérisé en ce que** l'actionneur (5) présente une partie de manchon (35) qui est reliée au logement d'actionneur (23), dans lequel l'actionneur (5) est disposé coaxialement sur l'arbre (3), placé rotatif en particulier, avec la partie de manchon (35).

10. Ensemble d'entraînement (38) pour une chaîne d'entraînement d'un véhicule, comprenant : une roue d'entraînement (41) qui peut être entraînée en rotation sur un premier pivot (A41) et un ensemble embrayage (2) selon l'une des revendications 1 à 9, dans lequel l'ensemble embrayage (2) présente une roue d'entrée (15, 37) qui est disposée coaxialement à l'arbre (3) et est en engrènement de denture avec la roue d'entraînement (41) pour la transmission du couple de rotation,
dans lequel la roue d'entrée (15, 37) de l'ensemble embrayage (2) présente un plus grand diamètre que la roue d'entraînement (41).

11. Ensemble d'entraînement selon la revendication 10, comprenant en outre une machine électrique (39) qui est reliée à la roue d'entraînement (41) pour la transmission du couple de rotation.

12. Ensemble d'entraînement selon la revendication 10 ou 11,
comprenant en outre une partie de sortie (43) avec une roue de sortie (42) qui peut être couplée rotative sur un troisième pivot (A43),
dans lequel l'ensemble embrayage (2) est disposé dans le trajet de puissance entre la roue d'entraînement (41) et la roue de sortie (42),
dans lequel la roue dentée (15) d'embrayage est en engrènement de denture avec la roue de sortie (42) de la partie de sortie (43) pour la transmission du couple de rotation,
dans lequel la roue dentée (15) d'embrayage présente un plus petit diamètre que la roue de sortie (42).

13. Ensemble d'entraînement selon la revendication 12, **caractérisé en ce que** la partie de sortie (43) est une cage de différentiel d'un engrenage différentiel (40), dans lequel l'engrenage différentiel (40) est conçu pour séparer un couple de rotation introduit dans la cage de différentiel en deux parties de sortie (45, 46) .

14. Ensemble d'entraînement selon la revendication 10 ou 11,
**caractérisé en ce que** la roue dentée (15) d'embrayage est la roue d'entrée de l'ensemble embrayage (2).
